Europäisches Patentamt

European Patent Office

Office européen des brevets

(11) Publication number: **0 295 424 B1**

## EUROPEAN PATENT SPECIFICATION

(45) Date of publication of patent specification: 27.04.94    (51) Int. Cl.⁵: **G06F 11/14**

(21) Application number: **88107496.7**

(22) Date of filing: **10.05.88**

(54) Method for managing subpage concurrency control and partial transaction rollback in a transaction-oriented system of the write-ahead logging type.

(30) Priority: **08.06.87 US 59666**

(43) Date of publication of application:
**21.12.88 Bulletin 88/51**

(45) Publication of the grant of the patent:
**27.04.94 Bulletin 94/17**

(84) Designated Contracting States:
**DE FR GB**

(56) References cited:

**C.J. DATE: "An introduction to database systems", vol. 1, 4th edition, 1986, pages 45,413-419, Addison-Wesley Publishing Co.**

**IEEE TRANSACTIONS ON SOFTWARE ENGINEERING, vol. SE-13, no. 1, January 1987, pages 23-31, New York, US; KOO et al.: "Checkpointing and rollback-recovery for distributed systems"**

(73) Proprietor: **International Business Machines Corporation**
**Old Orchard Road**
**Armonk, N.Y. 10504(US)**

(72) Inventor: **Haderle, Donald James**
**812 Lilac Way**
**Los Gatos, CA 95030(US)**
Inventor: **Lindsay, Bruce Gilbert**
**1185 Settle Avenue**
**San José, CA 95125(US)**
Inventor: **Mohan, Chandrasekaran**
**3837 Ramirez Court**
**San José, CA 95121(US)**
Inventor: **Pirahesh, Mir Hamid**
**6815 Royalwood Way**
**San José, CA 95120(US)**
Inventor: **Schwarz, Peter Martin**
**94 Glen Eyrie Avenue, Apt 6**
**San José, CA 95125(US)**

(74) Representative: **Burt, Roger James, Dr. et al**
**IBM United Kingdom Limited**
**Intellectual Property Department**
**Hursley Park**
**Winchester Hampshire SO21 2JN (GB)**

DIGEST OF PAPERS, 16TH ANNUAL SYM-PSOSIUM ON FAULT-TOLERANT COMPUTING SYSTEMS, July 1986, Vienna, Austria, pages 246-251; S. THANAWASTIEN et al.: "Evaluation of global checkpoint rollback strategies for error recovery in concurrent processing systems"

ACM COMPUTING SURVEYS, vol. 15, no. 4, December 1983, pages 287-317; HAERDER et al.: "Principles of transaction-oriented database recorvery"

## Description

This invention relates to a method for returning a log-based, transaction-oriented system to a transaction consistent state following a failure. More particularly, this invention relates to methods which permit the effects of a single transaction to be partially or fully annulled during normal system operation. In this regard, transactions are delimited at the user level by BEGIN, COMMIT, or ABORT primitives. With respect to the transaction log, UNDO and REDO information from the log is used to define and control both system recovery and partial or complete transaction rollback. More particularly, the method of the invention relates to transaction-oriented systems of the type which support concurrent execution of multiple transactions, and further of the type permitting fine-grained concurrency control mechanisms and consequent overlapping of transaction execution.

The prior art is illustrated by:

1. Gawlick et al, U. S. Patent 4,507,751, "Method and Apparatus for Logging Journal Data Using a Log Write Ahead Data Set", issued March 26, 1985.

2. R. A. Crus, "Data Recovery in IBM Database 2", IBM Systems Journal, Vol. 23, No. 2, copyright 1984, pp. 178-188.

3. Kapulka et al, U. S. Patent 4,87 8,167, "Managing Log Data in a Transaction-oriented System", issued October 31, 1989.

4. Crus et al, U. S. S/N 06/920,817, "Clustering Data for Optimizing Concurrency-locking Tradeoff in a Transaction-oriented System Having Write-ahead Logging", filed October 17, 1986.

5. C. J. Date, "An Introduction to Database Systems", Vol. 1, 4th Edition, The Systems Programming Series, Addison-Wesley Publishing Co., copyright 1986, Chapter 18.

6. Lindsay et al, "Notes on Distributed Databases", IBM Research Report RJ2571, July 1979.

7. P. M. Schwarz, "Transactions on Typed Objects", Ph.D Thesis, Carnegie-Mellon University, copyright 1984.

The prior art concerns two-phase, commit-type, transaction-oriented systems and the use of logs in both recovery and system restart. Of the above references, Gawlick discloses write-ahead logging, while Crus identifies proliferation of log records caused by repeated failure during recovery as posing a problem. Relatedly, Kapulka discloses a method for writing tagged records to multiple recovery streams and discarding same at the termination of the unit of recovery. The Lindsay reference describes log-based recovery limited to page granularity locking. The Schwarz thesis discusses a variety of log- based transaction recovery techniques. The remaining Crus and Date references are cited to show the state of the art.

As pointed out by C. J. Date, a "transaction" is a logical unit of work comprising a sequence of operations that transforms a consistent state of a recoverable resource into another consistent state without necessarily preserving consistency at all intermediate points.

A transaction processing system guarantees that if a transaction executes some updates against a recoverable data resource, and a failure occurs before the transaction reaches its normal termination or an interim point of consistency, then those updates will be undone. Since a transaction includes execution of an application-specified sequence of operations, its existence in the system is initiated with a special BEGIN UNIT OF WORK operation and ends with either a COMMIT operation or an ABORT operation.

The COMMIT and ABORT operations provide atomicity. The COMMIT operation signifies that a new point of consistency has been reached and all updates made by the unit of work must be made permanent. The ABORT operation means that a fault has occurred and any changes made thus far by the unit of work must be uncommitted, or undone, and the recoverable data resources returned to the prior point of consistency.

To fulfill this transaction recovery guarantee, the system must be able to remember across-system outages, what transactions were in progress, and their update actions so that their effect on recoverable data can be properly reflected when the system is restarted.

To meet the transaction recovery and data recovery guarantees, the system records in a log stored on stable storage the progress of a unit of work representing a transaction from its beginning to its end, and its actions which cause changes to recoverable data objects. The log becomes the source for ensuring either that the unit of work's committed actions are reflected, or that its uncommitted actions are reversed. When the logged actions reflect data object content, then those records also become the source for reconstruction of damaged or lost data. It should be appreciated that each log record is assigned a unique log sequence number (LSN) at the time the record is written to the log. The LSNs are assigned in ascending sequence. Before an updated page is written to stable storage, the LSN of the log record corresponding to the update is placed on the page.

Two-phase COMMIT processing involves "prepare" and " phases to ensure a uniform outcome for distributed transactions in the presence of failure. In the "prepare" phase, each process in a transaction "votes" on whether to continue. If all "votes" are affirmative, then the transaction "commit" outcome is recorded in the log.

As mentioned, the invention relates to transaction-oriented systems of the log write-ahead type. A log write-ahead protocol asserts that the log must be physically written to stable storage before new versions of the changed data replace earlier versions of the changed data on non-volatile storage. Stable storage, as used in this description, means nonvolatile storage which remains intact and available across system failures. DASD is an example. Additionally, transaction status is stored in the log and no transaction can be considered complete until its committed status and all its log data is safely recorded on stable storage. Thus, a restart procedure will recover any units of work (transactions) that completed successfully but did not manage to get their updated resources physically written to stable storage prior to the crash. This means that a transaction is not allowed to write a record to the physical data base until at least the UNDO portion of the corresponding log record has been written to the physical log. It further means that a transaction is not permitted to complete COMMIT processing until the REDO portions of all log records for the transaction have been written to the physical log.

Transactions define not only the unit of work but also the unit of recovery. Transactions are actually the result of many sequential steps. The progress of a transaction's unit of recovery can be represented by log records and its evolving state categorized as follows:

- Inflight - The unit of recovery exists within the system but has not reached a new point of consistency. If interrupted by a failure, its actions must be undone.
- Commit/Indoubt - The unit of recovery exists within the system, has reached a new point of consistency, and can either continue to successful completion or its actions can still be undone. The final decision is pending. If the work unit is interrupted by a failure, the system must be in a position to wait for the decision and then perform the appropriate completion actions.
- Ensure/commit - The unit of recovery exists within the system and has reached the point in its existence where all of its actions must be completed, even if interrupted by some failure.
- Disposition Completed - The unit of recovery no longer exists within the system, and therefore cannot be interrupted by a failure. However, the unit of recovery's completion actions, as well as its data update activity, must be reflected during data recovery processing.

Transaction-oriented systems all require the writing of data to some form of stable storage (DASD, tape) using uniform transfer units (pages). Both forward and backward processing may involve additions and withdrawal of page information. Presently, many transaction systems of the relational data base type support only locking at the granularity of an entire page. Page-level locking serializes transactions which change the same page. Concurrent updating of the same page is possible only where a finer locking granularity level (subpage/record) permits.

It should be appreciated that transaction-oriented systems must isolate the execution of concurrent transactions in order to permit applications programs to specify deterministic sequences of actions. In this regard, locking is often used to synchronize concurrent execution. It is well known in the art that locking granularity affects system throughput.

In an article in ACM Computing Surveys, vol. 15, no 4, December 1983, p. 287-317, Haerder et al.: ("Principles of transaction-oriented database recovery"), the principles of database recovery following a system failure in a transaction processing system based on log records is reviewed. In particular, this document discusses the need to UNDO partially complete transactions, which have been written back to stable storage, and to REDO transactions which have completed but did not fully write back to the database.

Compensation log records (CLRs) define the place or point in a timeline on a log where an UNDO action takes place. Further, the CLR identifies how much and what is being UNDONE at that point in time.

CLRs maintain a one-to-one correspondence between state changes to a page and log records in the log. It also provides a metric for present state of a page with respect to the log.

Consider where an incomplete transaction has deleted records from a page in the presence of a completed transaction. In this, the completed transaction has added records to the same page. As soon as multiple transactions access a single page, then there arises the possibility that one of the transactions is progressing in the forward direction, while another of them is UNDOing. When a failure occurs, it is desirable to know both the degree of forward progress, in terms of the last transaction to have completed in that direction, and the degree of backward progress of the transaction which has failed.

Suppose that transaction T1 drives a page from state A to B, and that transaction T2 drives the same page from B to C. Subsequently, T1 drives the page from C to D. Also suppose it is desired to rollback (UNDO) T1. If the state of the page is moved to A, then the B to C state transition of T2 appears not to be present on the page when in fact it is. Thus, it is necessary when multiple incomplete transactions modify the same page to consider rollback in terms of continual evolution of the page state and not as backtracking on the page state.

There are times when some of the results of a transaction persist even when the transaction ultimately aborts. This is illustrated in the circumstance of file extension. At the time a first transaction extends a file, then other transactions may utilize the extended area prior to the first transaction being committed. In the event that the first transaction were to abort, it would not be acceptable to UNDO the effects of the extension. Such an UNDO might very well lead to a loss of updates performed by the other transactions. On the other hand, if the extension-related actions were themselves interrupted by a failure prior to their completion, it is desired to UNDO them. These situations have been traditionally managed by starting new transactions. An application initiating such a new transaction waits until that transaction commits before proceeding. The new transaction mechanism is, of course, vulnerable to lock conflicts.

"Top Action", in the context of this invention, is taken to mean any subsequence of actions of a transaction which should not be UNDONE once the sequence is complete, irrespective of the outcome of the enclosing transaction.

The present invention is disclosed in the attached claims. It is accordingly an object of this invention to devise a method for managing restart recovery and transaction rollback in an environment which permits subpage concurrency control and partial transaction rollback in a transaction-oriented system of the write-ahead logging type. It is a related object to devise a method which minimizes the number of redundant UNDO operations otherwise occasioned by the expansion of the compensation log record chain in the presence of repeated failures during restart recovery.

The foregoing objects are satisfied by a method in which efficient recovery in the presence of subpage locking occurs through the use of compensation log records by performing REDO processing before UNDO processing during RESTART operations. The avoidance of the compensation for CLRs occasioned by repeated failures involves clever back-chaining of the compensation log records. Backward chaining in this context permits skipping over previously performed UNDOs, thereby avoiding all repetitions. The prior art had to accommodate the ever-increasing number of compensation records engendered by the repeated failures during restart recovery.

It should be recalled that any method of subpage/record-level locking must be amenable to recovery and restart. Consequently, the method, during recovery or restart, involves repeating history as defined by the log and bringing the system back to a state prior to a fault occurrence.

"Repeating history" relates to driving a system through the same sequence of states which occurred during normal processing. The repetition of state changes on the page without deviation occurs because REDO processing of changes missing in stable storage is performed prior to UNDO processing.

Repeating history (and avoiding the UNDOing of CLRs) requires ascertaining which log records might not be reflected in the state of the pages at RESTART time. It is important to minimize the number of log records which need to be examined for possible REDO on "dirty pages". In this regard, a "dirty page" is a page staged up from DASD and modified, but not as yet written back to DASD. Accordingly, the number of said log records can be bounded by determining the point in the log corresponding to the time at which the oldest page left in a buffer at the time of failure/crash occurrence was brought to the buffer. Similarly, it is desirable to avoid accessing pages which already contain the modification described by the log record being examined. To this end, a list of the pages updated since the checkpoint plus the list of dirty pages in the buffer at the last checkpoint gives an upper bound on the set of pages having log records prior to the failure which may be subject to REDO by those log records.

During restart after a crash, the method

(a) determines the point in the log where REDO processing must begin, ascertains information about "dirty pages", and ascertains the transactions that were "inflight" at the time of the crash by way of scanning the log from the last complete checkpoint to log end (analysis phase);

(b) repeats history up to the crash point for all transactions (REDO phase), ensuring that all log modifications are present on the data base pages; and

(c) rolls back all "inflight" transactions concurrently (UNDO phase), writing CLRs as UNDO actions are performed.

By appropriately backchaining CLRs, then UNDO operations associated with SYSTEM RESTART can be minimized by skipping over and not repeating previously performed UNDO operations. The method steps of this aspect include:

(a) logging updates for transactions progressing toward COMMIT, and logging compensation records for transactions performing UNDO operations;

(b) backchaining the log records of a transaction to form the necessary sequence of UNDO operations when rolling back the transaction;

whereby, responsive to a SYSTEM RESTART:

(c) identifying the active transactions and performing all REDO operations to establish the information state at the time of SYSTEM FAILURE; and

(d) performing UNDO operations for "inflight" transactions utilizing the backchained records to skip over and thus avoid repeating previously performed UNDO operations.

A transaction execution performing a sequence of actions which define an embedded "top action" comprises the steps of:

(a) ascertaining the position of the transaction's last log record;

(b) writing to the log REDO/UNDO records associated with the actions of the embedded top action; and

(c) upon completing the embedded top action, writing a dummy CLR to the log which backchains to the position of the last log record in step (a).

Figures 1 and 2 respectively depict a log record structure and a data page structure.

Figure 3 shows a restart transaction table.

Figure 4 sets out a restart/buffer pool dirty page table.

Table 1 lists a pseudo-code sequence for performing partial or complete transaction rollbacks.

Table 2 depicts a pseudo-code sequence for restarting a failed system.

Table 3 shows a pseudo-code sequence for the analysis phase of restart.

Table 4 sets out a pseudo-code sequence for performing the REDO phase of restart.

Table 5 lists a pseudo-code sequence for performing the UNDO phase of restart.

To assist comprehension of the novel method of the invention, a clarifying example is first set out, followed by a discussion thereof. After this, a preferred enabling embodiment shall be described.

Let each transaction T operate on record R contained on page P. In order for T1 to update R1 on P1, it is necessary for T1 to:

(1) fetch P1 from DASD, if P1 does not reside in a buffer;

(2) seize exclusive access to P1 for the duration of the update;

(3) modify R1 on P1;

(4) append a record to the log describing the page modification (R1 on P1) and giving sufficient information to either REDO or UNDO that modification; and

(5) record on P1 the address log sequence number (LSN) or relative byte address (RBA) of the log record, and release the exclusive access to P1, asserting/holding a lock on the logical change made to the page.

In order for T2 to update R2 on P1, it is necessary for T2 to:

(6) repeat steps (1) through (5) with reference to R2. As a consequence, the LSN on P1 has been updated a second time.

Suppose that T1 is to be partially rolled back and, more particularly, that the update to R1 is to be withdrawn. The method will access the log record describing the update to R1. The log record will define P1 to be the page where R1 is to be found and also provide the information needed to reverse the update to R1 on P1. P1 is then accessed and updated and a compensation log record (CLR) is constructed. This CLR describes the UNDO of the R1 update.

When the state of P1 is changed a third time (to UNDO T1's update to R1), the CLR is written to the log and the LSN on P1 is set to the LSN of the CLR. The situation is complicated by the fact that the update to R2 on P1 caused by T2 is still extant.

Further, suppose that T2 COMMITs and then the system fails. A COMMIT log record is written to the log as part of the commitment of T2. At this point, the log includes three log records (R1 update, R2 update, R1 CLR) and a COMMIT record. Let it further be assumed that P1 with the updates, although resident in a buffer pool, was never written to stable storage; i.e., DASD.

Query: What is the final state into which P1 should be placed?

Answer: P1 should be in the same state as it was at the time of COMMIT. That is, T2's change is present while T1's change is not present.

Query: What is the state of P1 on DASD?

Answer: P1 contains neither the R1 update of T1 nor the R2 update of T2 since it was not written back to DASD from the buffer pool.

Recall that the method allows:

(1) subpage/record-level locking granularity by repeating the logged history of multiple uncommitted changes to pages by different units of recovery; and

(2) partial/completed transaction rollback by adding more history records to the log.

At RESTART, the page has not been changed. Repeating the logged history dictates that T1's update to R1 be applied. Next, T2's updates to R2 are made. This is followed by T1's UNDO of the R1 update as applied to P1.

Since P1 includes the LSN/RBA of the log record describing the most recent change to the page, then it is possible to ascertain whether a given logged update has been applied to the page. Relatedly, each logged record written by a transaction points to an immediately preceding log record written by the same transaction. Thus, the state of the page can be correlated with the position of the log.

History is a well-ordered sequence whose granularity is governed by the object (page) carrying the LSN/RBA. Furthermore, history includes DO as well as UNDO events, but does not include REDO events. The REDO of history is not an event. UNDO may be thought of as revisionist history. Also, historic events are described relative to the objects they effect. In this case, the objects are the LSN/RBA carrying unit (page). Note, logical logging requires only that the update operation be fully described in the log record. For example, an operation which incremented/decremented a field of a record need only update the increment/decrement value. Neither the initial nor final value of the field need be saved.

The method is based on the notions that:

(1) One of the LSN carrying objects + a DO or CLR log record can be mapped to a new object state.
This illustrates REDO:

 object + DO/CLR object′

(2) A second mapping which must be supported is the mapping from an object state and a DO log record to a CLR and a new object state.
This illustrates:

 object′ + DO log record object″ + CLR

Note: The UNDO is not derived from or based upon the semantic value in the CLR. The purpose of a CLR is to describe the actions performed pursuant to UNDO.

(3) The DO log record performs double duty.
It maps from the old object to the new object and vice versa:

 object object′
 object′ object

It requires more information as to how the mapping is to be accomplished than that required for a CLR. Remember, it is the DO log records that are subject to UNDOs, and not CLRs.

 operation + object object′ + DO log record

The UNDO in this invention is unidirectional:

 object′ + DO log object″ + CLR

Note: CLRs are only involved in REDO.

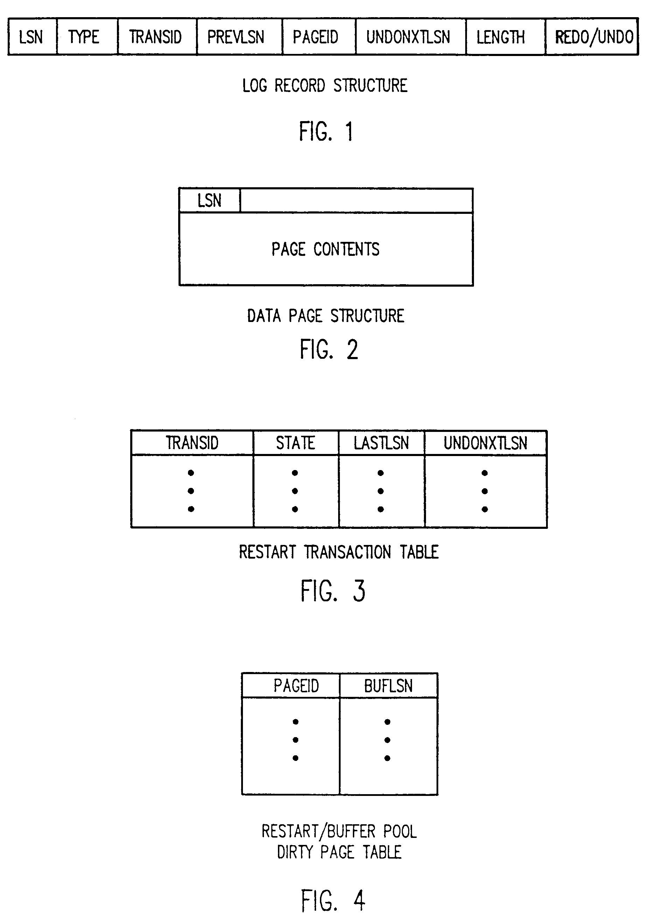

Figure 1 shows the structure of log records. A description of the various fields follows:

| | |
|---|---|
| LSN | Address of the first byte of the log record in the log address space. This is shown here as a field only to make it easier to describe the algorithm. The address will not actually be stored in the record. |
| TYPE | Indicates whether this is a compensation record ("compensation"), denominated CLR, a regular update record ("update"), denominated DO, or a commit protocol related record (e.g., "prepare"). |
| TRANSID | Identifier of the transaction that wrote the log record. |
| PREVLSN | Address of the preceding log record written by the same transaction. This field has a value of zero in the first log record of each transaction. |
| PAGEID | Present only in records of type "update" or "compensation". It is the identifier of the page to which the updates of this record were applied. This pageid will normally consist of two parts: an objectid (like tablespace or indexspace) and a page number within that object. The algorithm can deal with a log record that contains updates for multiple pages. For simplicity in the presentation, assume that only one page is involved. |
| UNDONXTLSN | Present only in compensation records and is the address of the next log record of this transaction that is to be undone and compensated for (i.e., the address of the log record that precedes the one that this log record is compensating). If all the log records of the transaction have been undone, then this field of the last log record contains a zero value. |
| LENGTH | Length of the log record including the header information. LSN + LENGTH - 1 should be the address of the last byte of the log record. |
| REDO/UNDO | Information to logically indicate the change made to a page (new value), as well as |

the information needed to UNDO the change (old value).

Figure 2 shows the data/index page structure that is of interest to the recovery algorithm. LSN is the address of the last byte of the log record that describes the last update that was applied to the page. This record may be a regular update record or a CLR. The address of the last byte is chosen instead of the first byte to make it easier for the Buffer Manager to figure out how much of the log should be on stable storage before it can write back to disk a dirty page. This is the well-known Write-ahead Logging (WAL) protocol in which, before an updated page is put on disk, all log records describing changes to the page are forced to disk. The current algorithm also expects the Buffer Manager to follow this WAL protocol. Other than that, the invention does not place any restrictions on the buffer page replacement policy.

The pages modified by a transaction may be written back to disk even before the transaction finishes execution (i.e., "steal" policy). The modified page is written back to the same location on disk from where it was read (i.e., inplace updating - no "shadows"). Every update operation can be immediately applied to the buffer version of the page containing the object (i.e., no deferred updating). If it is found desirable, even deferred updating (and, consequently, deferred logging) can be implemented. This invention is flexible enough not to preclude it from being done.

Figure 3 shows the transaction table that is used during restart to keep track of the state of transactions. The table gets its entries during the analysis phase from the last complete checkpoint's record(s), and through the analysis of the log records written after that checkpoint was initiated. During the UNDO phase also, the entries of the table are modified. If a checkpoint were to be taken during restart, the contents of the table would be included in the checkpoint record(s). A similar table is used during normal processing also by the Transaction Manager. This table is initialized at the end of restart from the restart transaction table. A description of the various fields of the table follows:

| | |
|---|---|
| TRANSID | Transaction ID. |
| STATE | The commit state of the transaction. The state can be prepared (P) or unprepared (U). |
| LASTLSN | The address of the last record written by the transaction. |
| UNDONXTLSN | The address of the next record to be undone. If the last record encountered for the transaction is a regular undoable update record (non-CLR), then LASTLSN = UNDONXTLSN. If the last record is a CLR, then this field contains the address of the record preceding the one that the last record compensated. |

Figure 4 shows the table used to represent information about dirty buffer pages. During normal processing, when a nondirty page is being fixed in the buffers for an update operation, the Buffer Manager records in the buffer pool (BP) dirty pages table the current end-of-log address (BUFLSN) which will be the address of some log record to be written in the future. The value of BUFLSN indicates from what point in the log there may be updates which are, possibly, not yet in the disk version of the data/index page. Whenever pages get written back to disk, the corresponding entries in the BP dirty pages table are removed. The contents of this table get included in the checkpoint record(s) written when checkpoints are taken during normal processing (i.e., at nonrestart time). The restart dirty pages table gets its entries from the last complete checkpoint's record(s) and through the analysis of the other records during the analysis phase. The minimum BUFLSN value in the table gives the starting point for the REDO phase during restart.

During normal (i.e., nonrestart) processing, transactions may be making forward progress or partial/complete rollbacks (aborts). The rollbacks may be system or transaction initiated.

If the granularity of locking is a record (or more generally, a subpage), then when an update is to be made to a record in a page after the record is locked for update, that page is fixed in the buffer and latched for exclusive access, the update is applied, a log record is written, the address of the last byte of the log record is placed in the LSN field of the page, and the page is unlatched and unfixed. For simplicity, it is assumed that a single log record can accommodate all the information (e.g., before and after images of modified fields, the value of the newly inserted record, the value of the deleted record, etc.) needed to redo or undo the update operation. There may be instances where more than one record needs to be written for this purpose (e.g., one record for the before image and another for the after image). It is easy to extend the invention to deal with such scenarios. In such cases, it is the address of the last byte of the after image record that should be placed in the LSN field of the data page.

Sometimes the identity of the record to be modified might not be known before the page is examined. In such cases, the record lock must be obtained after the page is latched. To avoid waiting for a lock while holding a latch (doing which could lead to undetected deadlocks), the lock is requested conditionally and, if it is not granted, the latch is released and the lock is requested unconditionally. Once the unconditionally requested lock is granted, the page is again latched and the update is performed as described above. If the conditionally requested lock is granted immediately, then again the update is done as before.

If the granularity of locking is a page, then there is no need to latch the page since the lock on the page will be sufficient to isolate the update from the other transactions. Otherwise, the actions taken are the same as in the record locking case.

To provide flexibility with respect to limiting the extent of transaction rollbacks, the notion of a "savepoint" is supported. A savepoint can be taken at any point during the execution of a transaction. After executing for a time, the transaction or the system can demand the undoing of all the updates done subsequent to the establishment of the savepoint. After such a partial rollback, the transaction can continue execution and start making forward progress again. When a savepoint is taken, what is remembered (call it "SAVELSN") is the address of the last log record written by the transaction (SAVELSN could also be the address of the end of the log when the savepoint is taken). If the savepoint is being established at the very beginning of the transaction (i.e., when it has not yet written a log record), the value is taken to be zero. At the time the transaction desires a rollback to a savepoint, it supplies the address of the log record, the successors of which have to be undone.

During the rollback, for each log record that is undone, a CLR is written. For ease of exposition, it is assumed that all the information about the undo action will fit in a single CLR. It is easy to extend the presented algorithm to the case where multiple CLRs need to be written. Note that there may be some records written during forward processing that cannot or should not be undone (prepare records, space class change records, etc.). Since CLRs will never be undone, they do not contain undo information (i.e., before images).

Table 1 contains the pseudo-code which describes the routine for doing rollbacks to a savepoint. The input to the routine is the savepoint LSN.

TABLE 1

```
Rollback(savelsn,transid);
   undonxt=trans_table_transid_.lastlsn;
                           /* addr of first record to undo */
    WHILE savelsn < undonxt DO; /* loop thru all records   */
                           /* written after record at      */
                           /* address savelsn              */
      logrec=log_read(undonxt);
                           /* read record to be processed  */
      SELECT (logrec.type)
        WHEN('update') DO; /* update record - may need to  */
                           /* be undone                    */
          IF logrec is undoable
             THEN DO;      /* log record needs to be       */
                           /* undone - not a redo only     */
                           /* record                       */
               page=fix&latch(logrec.pageid,'X');
                           /* fix and X latch page         */
               undo update(page,logrec); /* undo update   */
               log_write('compensation',logrec.transid,
                  trans_table_transid_.lastlsn,logrec.
                  pageid,logrec.prevlsn,...,lglsn,length);
                           /* write compensation record    */
                           /* which contains pointer to    */
                           /* next record to be undone     */
                           /* get back address and length  */
                           /* of log record                */
               page.lsn=lglsn+length-1; /* store address of */
                           /* last byte of compensation    */
                           /* record in modified page      */
               trans_table_transid_.lastlsn=lglsn;
                           /* store lsn of compensation    */
                           /* record in table              */
               unfix&unlatch(page);
             END;          /* undoable log record case     */
             ELSE;         /* redo only log record case -  */
                           /* ignore it                    */
          undonxt=logrec.prevlsn;
                           /* go on to preceding record    */
        END;               /* finished processing update   */
                           /* record                       */
        WHEN('compensation') DO; /* a CLR - get addr of    */
                           /* next record to undo          */
          undonxt=logrec.undonxtlsn;
        END;               /* processed CLR                */
        OTHERWISE DO;      /* if any other record skip it  */
```

```
                          /* and go on to preceding       */
                          /* record                        */
            undonxt=logrec.prevlsn;
                          /* go on to preceding record     */
      END;                /* processed uninteresting       */
                          /* record                        */
    END;                  /* select statement              */
  END;                    /* looping thru all records      */
  RETURN;
```

It is assumed that some form of two-phase commit protocol is used to commit transactions, and that a "prepare" record synchronously written to the log as part of this protocol includes the list of exclusive locks (IX, X, SIX, etc.) that the transaction holds. At this point, the nonexclusive locks can be released. Once a transaction enters the prepare state in such a fashion, it is committed by synchronously writing an "end" record and releasing its locks. A prepared transaction is aborted by rolling back the transaction to its beginning (with a call like rollback(0,transid), releasing its locks, and then writing the end record. Whether or not the abort and end records are synchronously written will depend on the type of two-phase commit protocol used. Also, the writing of the prepare record may be dispensed with if the transaction is not a distributed one or is read-only. It is not required by the current invention that the pages modified by a transaction be forced to disk at the end of transaction (i.e., no-force-at-commit policy).

Periodically, checkpoints are taken to reduce the amount of work that needs to be done during restart (extent of the log that needs to be examined, number of data pages that have to be read from disk, etc.). Checkpoints can be taken asynchronously (i.e., while other processing is going on). The checkpoint operation is initiated by writing a BEGIN_CHKPT record. Then the END_CHKPT record (assuming that all the information can be accommodated in a single END_CHKPT record) is constructed by including in it the contents of the normal transaction table (only the TRANSID, STATE, and LASTLSN columns), the BP dirty pages table, and any file mapping information for the objects (like tablespace, indexspace, etc.) that are "open" (i.e., for which the BP dirty pages table has entries). If one or more transactions are likely to remain in the prepared state for a long time due to prolonged loss of contact with the COMMIT coordinator, then it is a good idea to include in the END_CHKPT record information about the exclusive locks held by those transactions so that if a failure were to occur, then during restart those locks could be reacquired without having to access the prepare records of those transactions. Once the END_CHKPT record is constructed, it is written synchronously to the log and the address of the BEGIN_CHKPT record is stored in the master record which is in a well-known place on disk. It is not necessary that the END_CHKPT record be forced. It can be allowed to migrate to disk due to other logging activity and then the master record can be updated.

Since latches may have to be used to gain read access to the tables while gathering the needed information, it is a good idea to gather the information a little at a time to reduce the contention on the tables. For example, if the dirty pages table has 1000 rows, during each latching 100 entries can be examined. Even if the already examined entries change before the end of the checkpoint, it is acceptable.

Table 2 shows the pseudo-code which describes the restart routine that gets invoked at the beginning of the restart of a failed system. The input to this routine is the address of the master record, which contains the pointer to the BEGIN_CHKPT record of the last complete checkpoint taken before site failure or shutdown.

TABLE 2

```
restart(master_addr);
    restart_analysis(master_addr, trans_table, dirty_pages,
        redolsn);                 /* do analysis (reading in      */
                                  /* checkpoint record, etc.) and */
                                  /* populate dirty_pages &       */
                                  /* transaction tables; find out */
                                  /* lsn where redo should start  */
    restart_redo(redolsn, trans_table, dirty_pages);
                                  /* repeat history and           */
                                  /* reestablish state of pages   */
                                  /* as of crash time             */
    BP_dirty_pages_table = dirty_pages; /* now that redo          */
                                  /* is complete, the restart     */
                                  /* dirty pages table becomes    */
                                  /* the BP dirty pages table     */
    remove entries for nonbuffer-resident pages from
        BP_dirty_pages_table;
    restart_undo(trans_table); /* abort all inflight             */
                                  /* transactions that are not in */
                                  /* the prepared state           */
    reacquire locks for prepared trans; /* before allowing        */
                                  /* new trans to start execution */
                                  /* get locks for prepared trans */
                                  /* using info in their prepare  */
                                  /* records and, possibly, in    */
                                  /* the checkpoint record these  */
                                  /* trans' fate will be resolved */
                                  /* by the commit protocol       */
                                  /* recovery logic               */
    checkpoint();                 /* take a checkpoint; no need    */
                                  /* to force out dirty pages;    */
                                  /* checkpoints could have been  */
                                  /* taken even before or during  */
                                  /* restart                      */
    RETURN;
```

Table 3 contains the pseudo-code which describes the actions taken as part of the analysis phase during site restart. The input to this routine is the address of the master record. The outputs of this routine are the transaction table, which contains the list of transactions which were in the prepared or unprepared state at the time of system failure or shutdown; the dirty pages table, which contains the list of pages in the buffers that were potentially dirty when the system failed or was shut down; and the REDOLSN, which is the location on the log from which the REDO phase should start processing the log. The only log records that may be written by this routine are end records for transactions that had been completely rolled back before system failure, but their end records did not get written.

## TABLE 3

```
restart_analysis(master_addr, trans_table, dirty_pages,
    redolsn);
    master_rec = read_disk(master_addr);
                            /* read in the master record    */
    open_log_scan(master_rec.chkptlsn); /* open log scan    */
                            /* at begin_chkpt record        */
    logrec = next_log();    /* read in the begin_chkpt      */
                            /* record                       */
    logrec = next_log();    /* read log record following    */
                            /* begin_chkpt                  */
    WHILE NOT(end_of_log) DO; /* read all log records       */
                            /* until the end                */
        IF transaction-related record
            THEN                /* not checkpoint or         */
                                /* OSfile_return record      */
                IF logrec.transid NOT in trans_table
                    THEN        /* no entry in table; add it */
                        insert (logrec.transid,'U',logrec.lsn,
                            logrec.prevlsn) into trans_table;
                                /* insert trans into         */
                                /* trans_table in the        */
                                /* unprepared state          */
        SELECT(logrec.type)
            WHEN('update'$'compensation') DO; /* update or  */
                                /* compensation record       */
                trans_table_logrec.transid_.lastlsn=logrec.lsn;
                IF logrec.type='update'
                    THEN            /* update record         */
                        IF logrec is undoable
                            THEN    /* undoable update record */
```

## TABLE 3 (cont.)

```
                                trans_table_logrec.transid_.undonxtlsn=
                                    logrec.lsn; /* next record to undo is */
                                                /* this record            */
                            ELSE;   /* redo only record - ignore it */
                        ELSE            /* compensation record */
                            trans_table_logrec.transid_.undonxtlsn=
                                logrec.undonxtlsn; /* next record to undo */
                                                /* is the one pointed to by the */
                                                /* log record            */
                IF logrec is redoable & logrec.pageid NOT IN
                    dirty_pages
```

```
    THEN              /* page modified by update not */
                      /* in dirty list               */
       insert (logrec.pageid, logrec.lsn) into
          dirty_pages;
    END;              /* dealing with update/        */
                      /* compensation record         */
    WHEN('begin_chkpt') DO; /* found an incomplete    */
                      /* checkpoint's begin_chkpt     */
                      /* record - ignore it           */
    END;


    WHEN('end_chkpt') DO; /* found end_chkpt record   */
       FOR each entry in logrec.trans_table DO;
          IF transid NOT IN trans_table
             THEN DO;
                insert entry(transid,state,lastlsn) in
                  trans_table;
                set trans_table entry's undonxtlsn=lastlsn of
                  entry;
             END;
       END;              /* of for loop for trans_table */
       FOR each entry in logrec.dirty_paglst DO;
          IF pageid NOT IN dirty_pages table
             THEN DO;
                insert entry(pageid,buflsn) in dirty_pages;
             END;
             ELSE          /* page already in table      */
                set buflsn of dirty_pages entry to buflsn in
                  dirty_paglst;
       END;              /* of for loop for trans_table  */
    END;                /* end checkpoint record case   */
    WHEN('prepare') DO; /* prepare record               */
       trans_table_logrec.transid_.state='P';
       trans_table_logrec.transid_.lastlsn=logrec.lsn;
    END;                /* prepare record case          */
    WHEN('abort') DO;   /* abort record                 */
       trans_table_logrec.transid_.state='U';
       trans_table_logrec.transid_.lastlsn=logrec.lsn;
    END;                /* abort record case            */
    WHEN('end') DO;     /* end of trans record          */
       delete trans_table entry for which transid=
          logrec.transid;
    END;                /* end of trans record          */
    WHEN('OSfile_return') DO; /* a file which was part  */
                      /* of a tablespace or some such  */
                      /* entity was returned to the    */
                      /* operating system; this is an  */
                      /* undoable operation; assume     */
                      /* that this log record is not    */
                      /* associated with any            */
                      /* particular transaction and     */
                      /* that this action does not      */
                      /* take place when a checkpoint   */
```

14

```
                              /* is in progress; the file's    */
                              /* pages should not be accessed */
                              /* during the redo phase; so      */
                              /* remove any pages of this       */
                              /* file in the dirty pages        */
                              /* table                          */

        delete from dirty_pages all pages of returned file;
                              /* it is assumed that the log     */
                              /* record contains enough info    */
                              /* to identify which objects      */
                              /* (tablespace, etc.) this file */
                              /* constituted                    */
        END;                  /* OSfile_return record           */
      END;                    /* of select statement            */
      logrec = next_log();    /* read next log record           */
    END;                      /* reading until end of log       */
    FOR EACH trans_table entry with state='U' & undonxtlsn=0
        DO;
      write end record;       /* aborted trans with missing     */
                              /* end record                     */
      remove entry from trans_table;
    END;
    redolsn=min(dirty_pages.buflsn); /* return start            */
                              /* position for redo              */
    RETURN;
```

The method of this invention does not require the use of restart analysis. The transaction table can be constructed from the checkpoint record and the log records encountered during REDO. The REDO LSN is the minimum LSN from the dirty pages table in the checkpoint record. Suppression of the restart analysis phase also requires that other methods be used to avoid processing updates to files which have been returned to the Operating System. Another consequence of suppression of restart analysis is that the dirty pages table used during REDO cannot be used to filter update log records which occur after the restart checkpoint.

Table 4 sets out the pseudo-code which describes the actions taken as part of the REDO phase. The inputs to this routine are the REDOLSN and the dirty pages table supplied by the RESTART__ANALYSIS routine. This routine reestablishes the state of the data base as of the crash time. Note that only the pages in the dirty pages table may get modified during the REDO phase. All the pages listed in the dirty pages table will at least be read and examined during this phase, but no log records are written by the RESTART__REDO routine. Note also that there may be some rare instances when a page mentioned in the dirty pages table is not read. This will happen if the page was fixed in the buffer for writing, but was never updated, and the page was included in the checkpoint record. This gives rise to the possibility of initiating asynchronous I/Os to read in all these pages so that they may be available in the buffers even before the corresponding log records are encountered in the REDO phase. Since updates performed during the REDO phase are not logged, one can even do fancier things like build in memory queues of log records which potentially need to be reapplied (as dictated by the information in the dirty pages table) on a per-page basis and as the asynchronously initiated I/Os complete and pages come into memory process the corresponding log record queues. Note that this means that updates to different pages may get applied in different orders from the order represented in the log. This does not violate any correctness properties.

TABLE 4

```
restart_redo(redolsn, dirty_pages);
    open_log_scan(redolsn); /* open log scan and position  */
                            /* at restart pt               */
    logrec = next_log();   /* read log record at restart  */
                            /* point                       */
    WHILE NOT(end_of_log) DO; /* look at all records till  */
                              /* end of log                */
        IF logrec.type='update'$'compensation' & logrec is
            redoable & logrec.pageid IN dirty_pages &
            logrec.lsn >= dirty_pages_logrec.pageid_.buflsn
            THEN DO;            /* a redoable page update - not */
                               /* undo only record page update */
                               /* might not have made it to    */



                               /* disk before site failure;    */
                               /* need to check it             */
                page=read_disk(logrec.pageid); /* read in page */
            IF page.lsn < (logrec.lsn+logrec.length-1)
                THEN DO        /* update not on page; need to  */
                               /* redo it                      */
                    page=fix&latch(logrec.pageid,'X');
                               /* fix and X latch page         */
                    redo_update(page,logrec); /* redo update   */
                    page.lsn=logrec.lsn+logrec.length-1;
                    unfix&unlatch(page);
                END;           /* redid update                 */
                ELSE DO;       /* update already on page       */
                    dirty_pages_logrec.pageid_.buflsn=page.lsn+1;
                               /* update dirty page list with  */
                               /* correct info; this will      */
                               /* happen if this page was      */
                               /* dirty at the time of the     */
                               /* last checkpt before crash    */
                               /* and the page was written to  */
                               /* disk after the checkpt but   */
                               /* before system crash          */
                END;           /* no need to redo update       */
            END;               /* page on disk had to be       */
                               /* checked                      */
        logrec = next_log(); /* read next log record           */
    END;                     /* reading till end of log        */
    RETURN;
```

Table 5 sets out the pseudo-code which describes the actions taken as part of the UNDO phase. The input to this routine is the restart transaction table. Note that the dirty pages table is not consulted during this UNDO phase. Note also that since history is repeated (i.e., the state of the data base as of the crash time, as reflected in the log, is reestablished) before the UNDO phase is initiated, the LSN on the page is not consulted to determine whether an UNDO operation should be performed or not.

The RESTART_UNDO routine aborts transactions that are not in the prepared state. In the process of aborting the transactions, the routine writes CLRs. The Buffer Manager has to follow the usual write-ahead logging protocol while writing back dirty pages to disk during the UNDO phase.

TABLE 5

```
restart_undo(trans_table);
   WHILE EXISTS(trans with state='U' in trans_table) DO;
      undolsn=max(undonxtlsn) from trans_table entries with
         state='U';            /* pick up undonxtlsn of      */
                               /* nonprepared trans with     */
                               /* maximum undonxtlsn          */
      logrec=log_read(undolsn); /* read log record to be     */
                               /* undone or a CLR             */
      SELECT(logrec.type)
        WHEN('update') DO; /* update record - must undo       */
           IF logrec is undoable
              THEN DO;          /* record needs undoing - not  */
                               /* redo only record            */
                 page=fix&latch(logrec.pageid,'X');
                               /* fix and X latch page        */
                 undo_update(page,logrec); /* undo update     */
                 log_write('compensation',logrec.transid,
                    trans_table_logrec.transid_.lastlsn,
                    logrec.pageid,logrec.prevlsn,...,lglsn,
                    length);    /* write compensation record  */
                               /* which contains pointer to   */
                               /* next record to be undone    */
                               /* get back addr and length of */
                               /* log record                  */
                 page.lsn=lglsn+length-1; /* store address of */
                               /* last byte of compensation   */
                               /* record in modified page     */
                 trans_table_logrec.transid_.lastlsn=lglsn;
                               /* store lsn of CLR in table   */
                 unfix&unlatch(page);
              END;             /* undoable record case        */
              ELSE;            /* nonundoable record - ignore */
                               /* it                          */
           trans_table_logrec.transid_.undonxtlsn=
              logrec.prevlsn; /* next record to undo is the   */
                               /* one preceding the log record */
                               /* in its backward chain       */
           IF logrec.prevlsn=0
              THEN DO;         /* have undone till beginning  */
                               /* of trans                    */
                 log_write('end',logrec.transid,trans_table
                    _logrec.transid_.lastlsn,...);
                               /* write end record            */
                 delete trans_table entry for which transid=
                    logrec.transid;
                               /* get rid of trans from table */
              END;             /* trans fully undone          */
           END;               /* finished processing update   */
                               /* record                      */
        WHEN('compensation') DO; /* a CLR                     */
           trans_table_logrec.transid_.undonxtlsn=
```

```
                logrec.undonxtlsn;  /* pick up addr of next    */
                                    /* record to undo          */
        END;                        /* CLR case                */
        WHEN('abort') DO;   /* an abort record         */
           trans_table_logrec.transid_.undonxtlsn=
              logrec.prevlsn; /* pick up addr of next record */
                                    /* to examine              */
        END;                        /* abort record case       */
        WHEN('prepare') DO; /* a prepare record        */
           trans_table_logrec.transid_.undonxtlsn=
              logrec.prevlsn; /* pick up addr of next record */
                                    /* to examine              */
        END;                        /* prepare record case     */
     END;                           /* select statement        */
  END;                              /* abort all trans in table */
  RETURN;
```

By taking a checkpoint at the end of the analysis phase, some work can be saved if a failure occurs during restart. The entries of the dirty page list of this checkpoint will be the same as the entries that the restart dirty pages table contains at the end of the analysis phase. This is different from the normal checkpoints for which the dirty page list is obtained from the BP dirty pages table. The entries of the active transactions list of this checkpoint will be the same as the entries of the restart transaction table at the end of the analysis phase.

At the beginning of the REDO phase, the Buffer Manager is notified so that whenever it writes out a modified page to disk during REDO, it will change the restart dirty pages table entry for that page by making the BUFLSN equal to (PAGE.LSN + 1). Actually, instead of setting the value to (PAGE.LSN + 1), the Buffer Manager can do even better than that by setting the value to the address of the log record on which the REDO scan is positioned at that time. The latter value could potentially be much higher than the former. Note that it is enough if the Buffer Manager manipulates the restart dirty pages table in this fashion. The Buffer Manager does not have to maintain its own dirty pages table as it does during normal processing. Of course, it should still be keeping track of what pages are currently in the buffers. This enables the taking of checkpoints any time during the REDO phase in order to reduce the amount of the log that would need to be redone if a failure were to occur before the end of REDO. The entries of the dirty page list of this checkpoint will be the same as the entries of the restart dirty pages table at that time. The entries of the active transactions list of this checkpoint will be the same as the entries of the restart transaction table at the end of the analysis phase.

At the beginning of the UNDO phase, the restart dirty pages table is made the BP dirty pages table. At this point, the table is cleaned up by removing those entries for which the corresponding pages are no longer in the buffers. From then on, the BP Manager starts manipulating this table as during normal processing (i.e., removing entries when pages get written back to disk, adding entries when pages are about to become dirty, etc.). During the UNDO phase, the entries of the restart transaction table get modified. If a checkpoint were to be taken at any time during the UNDO phase, the dirty page list of that checkpoint will be the same as the entries of the BP dirty pages table. The entries of the active transactions list of this checkpoint will be the same as the entries of the restart transaction table at that time.

Assume that media recovery will be required at the level of a file or some such (like DBspace, tablespace, etc.) abstraction. The dumping or image copying of such an entity can be performed concurrently with modifications to the entity by other transactions. Of course, some minimal amount of synchronization (e.g., latching at the page level) will be needed. At the time the "fuzzy" dumping is initiated, the location of the BEGIN_CHKPT record of the preceding complete checkpoint is noted and remembered, along with the dumped data (call this checkpoint the "dump checkpoint"). Also assume that the image copying is done from the disk version of the entity. This may be more efficient and convenient than copying from the data base buffers. If the latter is found desirable, it is easy to modify the presented scheme to accommodate it. This means that more recent versions of the copied pages may be present in the buffers.

When media recovery is needed, the dumped version of the abstraction is loaded and then a REDO scan is started from the point (call it the media recovery REDO point) which is the MIN(MIN(BUFLSNs of dirty pages of the "file" abstraction in the dump checkpoint record), ADDR(BEGIN_CHKPT record of dump checkpoint). During the REDO scan, all the records relating to the entity being recovered are processed and the corresponding updates are applied, unless the information in the dump checkpoint record's dirty page list or the LSN on the page makes it unnecessary. Unlike during restart REDO, if a log record refers to a page that is not in the dirty page list, then that update must be applied (unless, of course, the page's LSN makes it unnecessary). To simplify matters, one might want to discard the dirty page list once the media recovery REDO point has been computed and assume that all subsequent updates must be reapplied. The savings from using the dirty page list may not be much during media recovery if a long portion of the log is going to be involved. Once the end of the log is reached, those inflight transactions that had made changes to the abstraction are undone as in the UNDO phase of restart. The information about the identities, etc., of such transactions may be kept separately somewhere, or may be obtained by doing analysis from the last complete checkpoint in the log to the end of the log or computed during the media recovery REDO.

**Claims**

1.   A method for establishing a prior point of consistency in a transaction-oriented system of the write-ahead logging type, including partial transaction rollbacks in which selected updates made by the transaction are withdrawn,

said system having a processor, a main memory coupling said processor, and a storage subsystem in which pages stored therein are staged to and from the main memory, a portion of the storage subsystem being operatively used as a log, said system and log being periodically checkpointed, the processor being responsive to each transaction executing selective updates to predetermined ones of the pages, said system supporting at least two transactions to concurrently and selectively update logically distinct portions of the same page, in which pages in main memory which have been altered are denominated "dirty pages" prior to being rewritten back to the storage subsystem,

the method comprising, upon occurrence of a failure in the system prior to any transaction reaching its normal termination, or an interim point of consistency, the steps of:

(a) scanning the log from the last complete check-point to log end in an ANALYSIS phase in order to determine:

(i) the identity of those transactions that had not reached a new point of consistency at the time of the failure, said transactions being denominated "inflight" transactions,

(ii) information about dirty pages ,

(iii) the point in the log where REDO processing should begin, based on the earliest log record in any of the dirty pages,

(b) repeating the activities for all transactions up to the failure point and ensuring that all log modifications are present on the pages in a REDO phase ; and

(c) withdrawing the updates for all "inflight" transactions concurrently in an UNDO phase.

2.   The method of claim 1, wherein each log record also includes the address (LSN) for the predecessor log record written by the same transaction, whereby the state of the page is correlated with the position of the log such that at any point on the log, it can be ascertained whether an update at that point in the log has already been placed on the page.

3.   The method of any preceding claim, further comprising the steps of:

logging updates for transactions progressing forwards normally and compensation records (CLRs) for transactions performing partial rollbacks (UNDOs);

backchaining update records forming the necessary sequence of UNDO operations;

backchaining the CLRs and forming a correlation order which skips over update records which have been undone or which should never be undone;

whereby, responsive to a system RESTART, the method further comprises the steps of:

identifying the active transactions and performing all REDO operations to establish the information state at the time of SYSTEM failure;

performing UNDO operations utilising the back-chained records to skip over and thus avoid repeating previous UNDO operations.

4.   The method of claim 3, in which a sequence of actions embedded within a transaction which should not be subject to an UNDO once said sequence has been completed irrespective of the outcome of the embedding transaction is denoted a "top action", further comprising the steps for processing said "top action" for a given transaction of:

ascertaining the location within the log of the given transaction's last log record,

writing REDO/UNDO records to the log associated with the actions of said "top action"; and

upon completion of the execution of said "top actions", writing a dummy CLR to the log which backchains to said last log record.

**Patentansprüche**

1. Ein Verfahren zur Erstellung eines vorherigen Konsistenzpunktes in einem transaktionsorientierten System des Vorausschreibaufzeichnungstyps, einschließlich Teilwiederholungen von Transaktionen, in welchen ausgewählte, von der Transaktion durchgeführte Update's herausgezogen werden,

wobei das System einen Prozessor hat, einen Hauptspeicher, der mit dem Prozessor gekoppelt ist, und ein Speicher-Subsystem, in welchem die darin gespeicherten Seiten in den Hauptspeicher ein- und ausgespeichert werden, ein Teil des Speicher-Subsystems wirksam als Aufzeichnung verwendet wird, System und Aufzeichnung regelmäßig geprüft werden, der Prozessor, der auf jede Transaktion reagiert, die selektive Update's aus zuvor bestimmten Seiten ausführt, das System wenigstens zwei Transaktionen unterstützt, um gleichzeitig und selektiv Update's in logisch unterschiedlichen Teilen von der gleichen Seite durchzuführen, in welchem Seiten im Hauptspeicher, die geändert wurden, "unreine Seiten" genannt werden, bevor sie wieder in das Speicher-Subsystem zurückgeschrieben werden,

das Verfahren bei Auftreten eines Ausfalls in dem System, bevor irgendeine Transaktion ihren normalen Abschluß oder einen Zwischenpunkt an Konsistenz erreicht, die folgenden Schritte enthält:

(a) Abtasten der Aufzeichnung von dem letzten, vollständigen Prüfpunkt zum Aufzeichnungsende in einer ANALYSE Phase, um

(i) die Identität dieser Transaktionen zu bestimmen, die keinen neuen Punkt an Konsistenz zu dem Zeitpunkt des Ausfalls erreicht hat, wobei diese Transaktionen als "inflight" Transaktionen bezeichnet werden,

(ii) Informationen über unreine Seiten festzulegen,

(iii) den Punkt in der Aufzeichnung zu bestimmen, wo die REDO Verarbeitung beginnen sollte, basierend auf der frühesten Aufzeichnung in irgendeiner der unreinen Seiten,

(b) Wiederholung der Aktivitäten für alle Transaktionen ab dem Ausfallpunkt und Sicherstellung, daß alle Log-Änderungen auf den Seiten in einer REDO Phase vorhanden sind; und

(c) Herausziehen der Update's für alle gleichzeitigen "inflight" Transaktionen in einer UNDO Phase.

2. Das Verfahren von Anspruch 1, wobei jede Log-Aufzeichnung auch die Adresse (LSN) für die vorhergehende Log-Aufzeichnung enthält, die von der gleichen Transaktion geschrieben wurde, wobei der Status der Seite mit der Position der Aufzeichnung in Bezug ist, so daß in irgendeinem Punkt in der Aufzeichnung ermittelt werden kann, ob ein Update an diesem Punkt in der Aufzeichnung bereits auf der Seite plaziert wurde.

3. Das Verfahren von irgendeinem vorhergehenden Anspruch, das desweiteren die Schritte von

Aufzeichnung von Update's für normalerweise vorwärts fortschreitende Transaktionen und Kompensationsaufzeichnungen (CLR's) für Transaktionen, die Teilwiederholungen durchführen (UNDO's);

Rückverkettung von Update Aufzeichnungen, die die erforderliche Sequenz von UNDO Operationen bilden;

Rückverkettung der CLR's und Bildung eines Korrelationsbefehls, der über die Update Aufzeichnungen springt, die UNDONE gemacht wurden oder die niemals UNDONE gemacht werden sollten;

wobei als Reaktion auf einen System-Wiederanlauf das Verfahren außerdem die Schritte enthält:

zur Identifizierung der aktiven Transaktionen und Durchführung aller REDO Operationen, um den Informationsstatus zu dem Zeitpunkt des SYSTEM-Ausfalls zu erstellen;

zur Durchführung der UNDO Operationen unter Verwendung der rückverketteten Aufzeichnungen zum Überspringen und dadurch Wiederholungen von vorherigen UNDO Operationen zu vermeiden.

4. Das Verfahren von Anspruch 3, in welchem eine Sequenz von Aktionen eingebettet innerhalb einer Transaktion, die einer UNDO nicht unterzogen werden sollte, sobald die Sequenz komplettiert wurde, ungeachtet des Ergebnisses der eingebetteten Transaktion, "top action" genannt wird, wobei das Verfahren außerdem die Schritte zur Verarbeitung der "top action" für eine vorgegebene Transaktion

zur Ermittlung des Ortes innerhalb der Aufzeichnung der letzten Log-Aufzeichnung von der vorgegebenen Transaktion,

zum Schreiben von REDO/UNDO Aufzeichnungen in die zu den Aktionen der "top action" gehörenden Aufzeichnungen; und

bei Abschluß der Ausführung von den "top actions", Schreiben einer Pseudo-CLR in die Aufzeichnung, die zu der letzten Log-Aufzeichnung rückverkettet wird.

**Revendications**

1. Méthode pour établir un point antérieur de cohérence dans un système transactionnel du type d'enregistrement à écriture anticipée, comprenant des repositionnements partiels de transactions dans lesquels des mises à jour sélectionnées faites par la transaction sont retirées,

    ledit système ayant un processeur, une mémoire principale connectant ledit processeur, et un sous-système d'emmagasinage dans lequel des pages qui y sont emmagasinées sont transférées vers ou à partir de la mémoire principale, une portion du sous-système d'emmagasinage étant utilisée fonctionnellement comme récapitulatif, ledit système et ledit récapitulatif étant périodiquement vérifiés, le processeur étant sensible à chaque transaction exécutant des mises à jour sélectives de pages prédéterminées, ledit système supportant qu'au moins deux transactions mettent à jour simultanément et sélectivement des portions de la même page distinctes logiquement, dans lequel des pages de la mémoire principale qui ont été altérées sont dénommées "pages sales" avant d'être écrites à nouveau dans le sous-système d'emmagasinage,

    la méthode comprenant, lorsque survient une erreur du système avant qu'une transaction ait atteint son achèvement normal, ou à un point de cohérence intermédiaire, les étapes de:

    a) balayer le récapitulatif à partir du dernier point de vérification complète jusqu'à la fin dans une phase d'ANALYSE, de façon à déterminer:

        i) l'identité des transactions qui n'avaient pas atteint un nouveau point de cohérence au moment de l'erreur, lesdites transactions étant appelées transactions "en vol",

        ii) les informations concernant les "pages sales",

        iii) le point du récapitulatif où un traitement REDO devrait débuter, basé sur l'enregistrement de récapitulatif le plus ancien dans n'importe quelles pages "sales",

    b) répéter les étapes pour toutes les transactions jusqu'au point d'erreur et s'assurer que toutes les modifications de récapitulatif sont présentes sur les pages de la phase REDO, et

    c) retirer les mises à jour pour toutes les transactions "en vol" simultanées dans une phase UNDO.

2. Méthode selon la revendication 1, dans laquelle chaque enregistrement récapitulatif comprend aussi l'adresse (LSW) pour l'enregistrement récapitulatif précédent écrit par la même transaction, de façon à ce que l'état de la page soit corrélée avec la position du récapitulatif, de telle sorte qu'en tout point du récapitulatif, on puisse s'assurer qu'une mise à jour à ce point du récapitulatif a déjà été opérée sur la page.

3. Méthode selon une quelconque des revendications précédentes, comprenant en outre les étapes de:

    mémoriser les mises à jour pour les transactions progressant normalement et les enregistrements de compensation (CLR) pour les transactions effectuant des repositionnements partiels (UNDO),

    mettre en séquence les enregistrements de mise à jour en formant la séquence nécessaire des opérations UNDO,

    mettre en séquence les CLR et former un ordre de corrélation qui ne prend pas en compte les enregistrements de mise à jour qui ont été repositionnés partiellement ou qui ne devraient jamais être repositionnés partiellement,

    de sorte que, en réponse au REDEMARRAGE du système, la méthode comprend en poutre les étapes de:

    identifier les transactions actives et effectuer toutes les opérations REDO pour établir l'état d'information existant au moment de l'erreur de SYSTEME,

    effectuer les opérations UNDO en utilisant les enregistrements mis en séquence pour sauter et ainsi éviter de répéter les opérations UNDO précédentes.

4. Méthode selon la revendication 3, dans laquelle une séquence d'actions incorporée dans une transaction qui ne devrait pas être l'objet d'une UNDO une fois que ladite séquence a été complétée indépendamment de l'issue de la transaction incorporée est dénommée une "action au sommet", comprenant en outre les étapes de traitement suivantes de ladite "action au sommet" pour une transaction donnée:

    s'assurer de l'emplacement dans le récapitulatif du dernier enregistrement récapitulatif de la transaction donnée,

écrire les enregistrements REDO/UNDO dans le récapitulatif associé aux opérations de ladite "action au sommet", et

à l'achèvement de l'exécution de ladite "action au sommet", écrire un CLR factice dans le récapitulatif qui s'enchaîne avec le dernier enregistrement du récapitulatif.

EP 0 295 424 B1

| LSN | TYPE | TRANSID | PREVLSN | PAGEID | UNDONXTLSN | LENGTH | REDO/UNDO |
|-----|------|---------|---------|--------|------------|--------|-----------|

LOG RECORD STRUCTURE

FIG. 1

| LSN | |
|-----|---|
| PAGE CONTENTS | |

DATA PAGE STRUCTURE

FIG. 2

| TRANSID | STATE | LASTLSN | UNDONXTLSN |
|---------|-------|---------|------------|
| ⋮ | ⋮ | ⋮ | ⋮ |

RESTART TRANSACTION TABLE

FIG. 3

| PAGEID | BUFLSN |
|--------|--------|
| ⋮ | ⋮ |

RESTART/BUFFER POOL
DIRTY PAGE TABLE

FIG. 4